# EUROPEAN PATENT SPECIFICATION

(11) **EP 3 067 642 B1**
(45) Date of publication and mention of the grant of the patent: **17.05.2017**
(21) Application number: 16156971.0
(22) Date of filing: 23.02.2016
(51) Int. Cl.: F24J 2/52, F24J 2/34

(54) **SUPPORT AND FASTENING ASSEMBLY FOR SOLAR SYSTEMS**
UNTERSTÜTZUNG UND BEFESTIGUNGSANORDNUNG FÜR SOLARANLAGEN
ASSEMBLAGE DE SUPPORT ET DE FIXATION POUR SYSTÈMES SOLAIRES

(30) Priority: 09.03.2015 IT UB20150011
(43) Date of publication of application: 14.09.2016
(73) Proprietor: Cordivari S.r.L., 64020 Morro d'Oro (TE) (IT)
(72) Inventor: BONOLIS, Alessandro, 64020 Morro d'Oro (TE) (IT)
(74) Representative: Mulas, Chiara

(56) References cited:
- WO-A1-2014/162834
- JP-A- 2012 002 044
- US-A1- 2007 193 872
- US-A1- 2010 236 183
- US-A1- 2012 056 066
- US-A1- 2013 326 994

## Description

The present invention relates to a support and fastening assembly for solar systems.

More precisely, the present invention relates to a support and fastening assembly or carpentry allowing to install the solar systems both on flat roofs or on pitched roofs.

As known art, support and fastening systems exist developed for mounting solar systems on flat surfaces and other support and fastening systems developed for mounting solar systems on sloping surfaces.

However, such systems do not allow to mount the solar systems indifferently on each type of flat or inclined surface.

In this regard, the US patent applications US 2013/326994 A1 and US 2010/236183 A1 both describe a respective support and fastening system for solar systems able to assume both configurations, but with an excessive and complex number of components.

The object of the present invention is to obtain a support system for solar systems that is versatile, flexible and economical and which can be mounted indifferently on roofs having flat surface or inclined surface using a smaller number of components, most of which can be used in both configurations, thus reducing the number of required components and simplifying the assembling/disassembling of the system, which are mainly identical for both configurations.

It is an object of the present invention an assembly for supporting and fastening solar systems, said solar systems comprising a solar collector and eventually a storage tank, said assembly comprising at least two crossbeams parallel between each other, at least two mounting bars parallel between each other and perpendicular to said crossbeams and coupled to them forming a quadrilateral for the support of the solar collector, a first pair of box brackets, each box bracket having a bottom face, a top face and two side faces, each box bracket being coupled from below to a mounting bar in proximity of the first crossbeam, two pillars having the top end having a hollow quadrangular cross-section, and a second pair of box brackets, said assembly being configured for alternatively assuming a first configuration for the support of solar systems and the fastening to slanted surfaces, wherein each of said two further box brackets is coupled from the bottom to a respective mounting bar in proximity of the second crossbeam and wherein each box bracket is fixed to said tilted surface, or a second configuration for the support of solar systems and the fastening to flat surfaces, wherein each pillar is fixed to said flat surface, each box element of the first pair of box brackets has the bottom face and the contiguous lateral face inserted in said top hollow end of a respective pillar and the ends of said mounting bars in correspondence of the second crossbeam in contact with said flat surface.

Further, according to the invention, said assembly can comprise two further mounting bars each coupled to a respective mounting bar, wherein said first pair of box brackets is coupled from the bottom to said two further mounting bars, two saddles for the support of the storage tank of a solar system, coupled from the top to said further mounting bars, and a third pair of box elements coupled from the bottom to said two further mounting bars.

Still according to the invention, said assembly can comprise two reinforcement plates, each coupled to a respective saddle and to a respective further mounting bar in order to support said saddle.

Always according to the invention, said assembly can comprise four lifting brackets, and wherein in said first configuration, each lifting bracket is coupled from the bottom to a respective box bracket and is fixed to said slanted surface.

Further, according to the invention, said assembly can comprise four further crossbeams, each coupled to an end of said crossbeams.

Preferably, according to the invention, said assembly can comprise at least two connection bars, and in that in said second configuration said at least two connection bars are X-arranged between said two pillars.

Always according to the invention said assembly can comprise two further connection bars and in said second configuration, each of said further connection bars connects a respective pillar with a respective mounting bar.

Still according to the invention, in said first configuration, at least two of said at least two connection bars can be coupled to a respective pair of said further box brackets.

Furthermore, according to the invention, in said first configuration, one of said at least two connection bars can be coupled to one or both of said pair of box brackets.

Finally, according to the invention, said crossbeams, said mounting bars and/or said connection bars have a "L" cross-section.

The invention will be now described, for illustrative, but not limitative, purposes, with particular reference to the figures of the enclosed drawings, wherein:
figure 1 shows a top perspective view of the support assembly for solar systems according to the invention in a first configuration;
figure 2 shows a partial side view of the support assembly of figure 1;
figure 3 shows an exploded view of the support assembly of figure 1;
figure 4 shows a perspective view of a box support bracket assembly of figure 1;
figure 5 shows a perspective view of a lifting saddle of the support assembly of figure 1;
figure 6 shows a perspective view of a saddle of the support assembly of figure 1;
figure 7 shows a perspective view of the support assembly for solar systems according to the invention in a second configuration;
figure 8 shows a side view of the support assembly of figure 7;
figure 9 shows a perspective exploded view of the support assembly of figure 7; and
figure 10 shows a perspective view of a support assembly for solar systems according to the invention in a further embodiment in said second configuration.

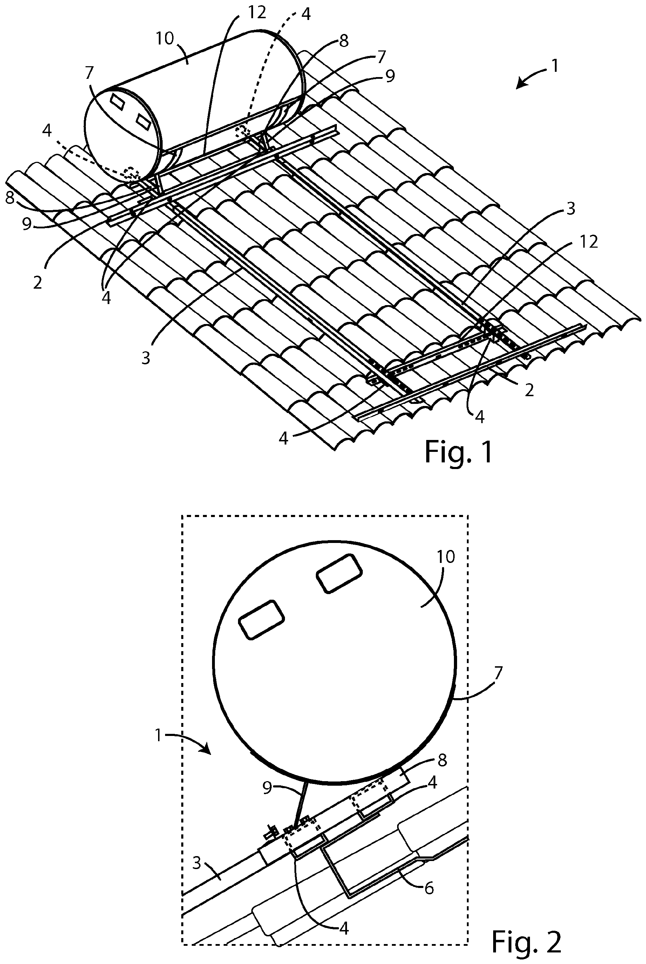

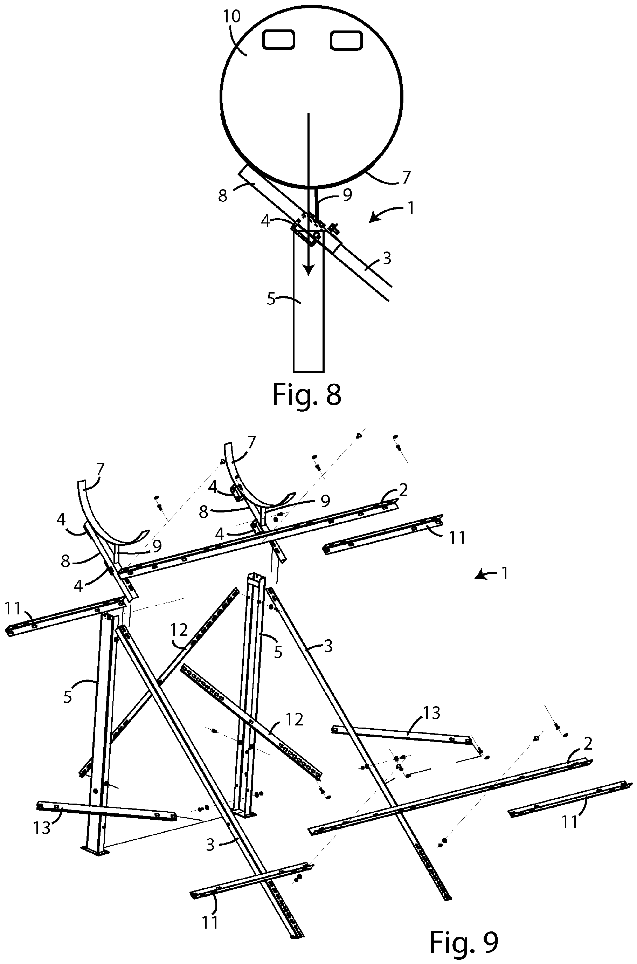

Referring to figures 1 - 9, it is observed a support and fastening assembly for solar systems according to the invention, indicated by the reference number 1.

Said assembly 1 can be used to support both the classical solar systems, i.e. having a flat box-shaped collector and a cylindrical storage tank, or compact solar systems having a substantially box shape.

Said assembly 1 comprises two crossbeams 2, parallel each other, two mounting bars 3, parallel each other and perpendicular to said crossbeams 2 and coupled thereto forming a quadrilateral for the support of solar collectors, and a first pair of box brackets 4, each box bracket 4 having a bottom face, a top face and two side faces, each coupled by means of the respective top face to the lower part of a mounting bar 3 close to the first crossbeam 2.

Preferably, as shown in the figures, said crossbeams 2 and the mounting bars 3 have an L-shaped section and are coupled each other on their flat back, to be able to easily accommodate one or more box-shaped elements such as solar collectors.

Furthermore, the assembly 1 comprises two pillars 5 having at least the upper end with a quadrangular hollow section, and a second pair of box brackets 4.

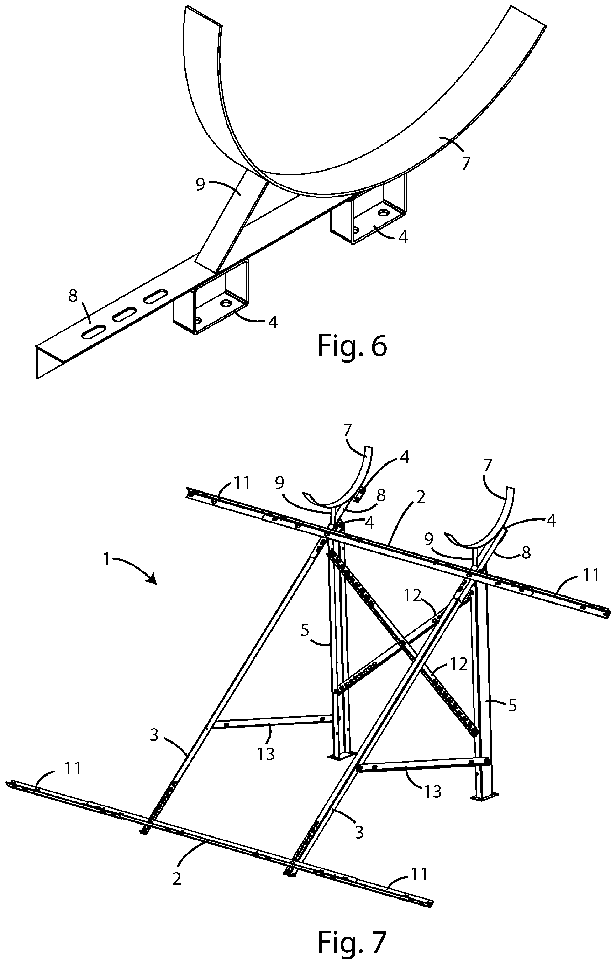

Assembly 1 according to the invention is configured to alternately assume either a first configuration for the support of solar systems and the fastening to inclined surfaces (shown in figures 1 - 3) that a second configuration for fastening to flat surfaces (shown in figures 7 - 9).

More specifically, in the first configuration each one of the two further box brackets 4 is coupled inferiorly to a respective mounting bar 3 close to the second crossbeam 2, and each box bracket 4 is fixed to said inclined surface.

In the second configuration, however, each pillar 5 is fixed to the flat surface, each box-shaped element 4 has the bottom face and a contiguous side face inserted in said upper hollow end of a respective pillar 5, and the ends of said mounting bars 3 in correspondence of the second crossbeam 2 into contact with said flat surface, in other words resting on it. In this second configuration, the assembly 1, besides supporting the solar system and fastening it to the flat support surface, is configured in such a way that the solar collector assumes an inclined position.

As shown in the enclosed figures, when the solar system includes a separate cylindrical storage tank 10, the assembly 1 according to the invention may further comprise two further mounting bars 8, each one coupled to a respective mounting bar 3, the first pair of box brackets 4 is coupled inferiorly to the two further mounting bars 8, rather than to the mounting bars 3. Further, the assembly 1 comprises two saddles 7 for the support of the storage tank 10, superiorly coupled to said further mounting bars 8, and a third pair of box-shaped elements 4 coupled inferiorly to said two further mounting bars 8.

Said saddles 7 are therefore parallel each other and are arranged to stably support the storage tank 10.

As shown in particular in figure 6, said assembly 1 may further comprise two reinforcement plates 9, each coupled to a respective saddle 7 and to a respective further mounting bar 8 to provide greater stability and reinforce the respective saddle 7, for the support of the tank 10.

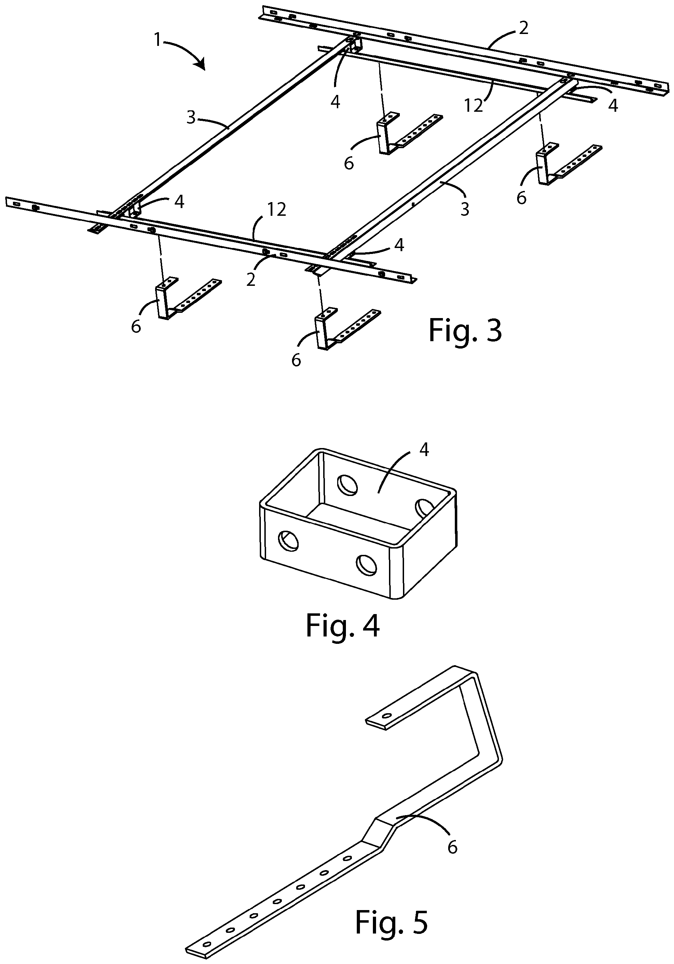

In the first support configuration on inclined surfaces, such as pitched roofs, the assembly may provide further four lifting brackets 6 (shown for example in figures 2 and 5), each one coupled to a respective box lower bracket 4 and fixed to the inclined surface. Such lifting brackets 6 are U-shaped, with a longer arm able to be inserted between the tiles of a pitched roof. The lifting brackets 6 allow to lift the solar collector with respect to the inclined surface.

Furthermore, in order to have according to a horizontal orientation a higher number of vertically oriented solar collectors, the assembly 1 may provide four additional crossbeams 11, each one coupled to one end of said crossbeams 2, in order to accommodate the width of the solar collectors (such as shown in figure 7).

Further, when the assembly 1 is in said second configuration for the support of solar systems on flat surfaces, the assembly 1 according to the invention may comprise connection bars 12 arranged according to an X configuration between said two pillars 5, to strengthen the support of the pillars 5.

To obtain an even greater support to the pillars 5, the assembly 1 may comprise further connection bars 13 to connect a respective pillar 5 with a respective mounting bar 3, so as to confer greater stability to the structure.

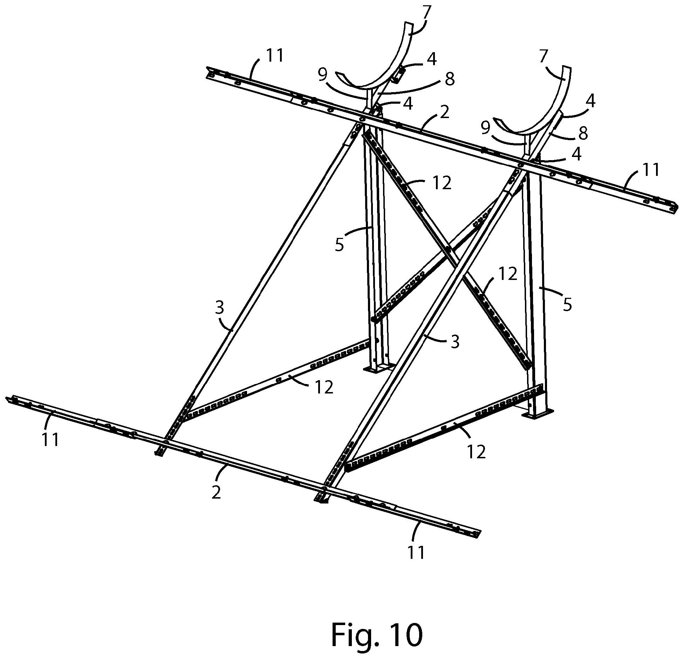

Alternatively, for convenience of production, said further connection bars 13 can be equal to said connection bars 12 (as shown in figure 10).

Even said connection bars 12 and 13 may have an L-shaped section.

In said first configuration of the assembly 1, one or more bars of connection 12 or 13 may be coupled to each pair of box brackets 4 to provide a greater support and support surface to the assembly 1 (as shown in figures 1, and 3), and two or more of the connection bars 12 or 13 may be coupled to a respective pair of said further box brackets 4, when the assembly 1 must also support the storage tank 10, always to help to provide more support and surface of the assembly 1 (as shown in figures 1 and 2).

In addition, when said solar collector also includes a storage tank 10, each connecting connection bar 12 or 13 can be fixed inferiorly to each pair of box brackets 4 and superiorly to a pair of lifting brackets 6.

Therefore, an advantage of the assembly according to the invention is the possibility to use common components for fixing the solar system both on flat surfaces and on inclined surfaces, and to carry out the same assembly operation, without the need for complex fastening systems and speeding the assembly time.

In the foregoing, preferred embodiments and variants of the present invention have been suggested, but it is to be understood that those skilled in the art can introduce modifications and changes, without departing from the scope, as defined by the enclosed claims.

## Claims

1. Assembly (1) for supporting and fastening solar systems, said solar systems comprising a solar collector and eventually a storage tank (10), said assembly (1) comprising
at least two crossbeams (2) parallel between each other,
at least two mounting bars (3) parallel between each other and perpendicular to said crossbeams (2) and coupled to them forming a quadrilateral for the support of the solar collector,
a first pair of box brackets (4), each box bracket (4) having a bottom face, a top face and two side faces, each box bracket (4) being coupled from below to a mounting bar (3, 8) in proximity of the first crossbeam (2),
two pillars (5) having the top end having a hollow quadrangular cross-section, and
a second pair of box brackets (4),
said assembly (1) being configured for alternatively assuming
a first configuration for the support of solar systems and the fastening to slanted surfaces, wherein each of said two further box brackets (4) is coupled from the bottom to a respective mounting bar (3) in proximity of the second crossbeam (2) and wherein each box bracket (4) is fixed to said tilted surface, or
a second configuration for the support of solar systems and the fastening to flat surfaces, wherein each pillar (5) is fixed to said flat surface, each box element (4) of the first pair of box brackets (4) has the bottom face and the contiguous lateral face inserted in said top hollow end of a respective pillar (5) and the ends of said mounting bars (3) in correspondence of the second crossbeam (2) in contact with said flat surface.

2. Assembly (1) according to the previous claim, **characterized in** further comprising
two further mounting bars (8) each coupled to a respective mounting bar (3), wherein said first pair of box brackets (4) is coupled from the bottom to said two further mounting bars (8),
two saddles (7) for the support of the storage tank (10) of a solar system, coupled from the top to said further mounting bars (8), and
a third pair of box elements (4) coupled from the bottom to said two further mounting bars (8).

3. Assembly (1) according to the previous claim, **characterized in** comprising two reinforcement plates (9), each coupled to a respective saddle (7) and to a respective further mounting bar (8) in order to support said saddle (7).

4. Assembly (1) according to any one of the previous claims, **characterized in** comprising four lifting brackets (6), and wherein in said first configuration, each lifting bracket (6) is coupled from the bottom to a respective box bracket (4) and is fixed to said slanted surface.

5. Assembly (1) according to any one of the previous claims, **characterized in** comprising four further crossbeams (11), each coupled to an end of said crossbeams (2).

6. Assembly (1) according to any one of the previous claims, **characterized in** comprising at least two connection bars (12, 13), and **in that** in said second configuration said at least two connection bars (12) are X-arranged between said two pillars (5).

7. Assembly (1) according to any one of the previous claims, **characterized in** further comprising two further connection bars (12, 13) and **in that** in said second configuration, each of said further connection bars (12, 13) connects a respective pillar (5) with a respective mounting bar (3).

8. Assembly (1) according to any one of the claims 6 or 7, when depending from claim 2 or 3, **characterized in that** in said first configuration, at least two of said at least two connection bars (12, 13) are coupled to a respective pair of said further box brackets (4).

9. Assembly (1) according to any one of the claims 6 or 7, **characterized in that** in said first configuration, one of said at least two connection bars (12, 13) is coupled to one or both of said pair of box brackets (4).

10. Assembly (1) according to any one of the previous claims, **characterized in that** said crossbeams (2, 11), said mounting bars (3, 8) and/or said connection bars (12, 13) have a "L" cross-section.

## Patentansprüche

1. Anordnung (1) zum Tragen und Befestigen von Solaranlagen, wobei die Solaranlagen einen Sonnenkollektor und gegebenenfalls einen Speichertank (10) umfassen, wobei die Anordnung (1) umfasst:
mindestens zwei Querbalken (2) parallel zueinander,
mindestens zwei Montageschienen (3) parallel zueinander und senkrecht zu den Querbalken (2) und an diese gekoppelt, wodurch ein Viereck zum Tragen des Sonnenkollektors gebildet wird,
ein erstes Paar kastenförmiger Klammern (4), wobei jede kastenförmige Klammer (4) eine Unterseite, eine Oberseite und zwei Seitenflächen aufweist, wobei jede kastenförmige Klammer (4) in der Nähe des ersten Querbalkens (2) von unten her an eine Montageschiene (3, 8) gekoppelt ist,
zwei Pfosten (5), deren oberes Ende einen hohlen quadratischen Querschnitt aufweist, und
ein zweites Paar kastenförmiger Klammern (4),
wobei die Anordnung (1) dazu eingerichtet ist, alternativ
eine erste Konfiguration zum Tragen von Solaranlagen und der Befestigung auf schrägen Oberflächen anzunehmen, wobei jede der zwei weiteren kastenförmigen Klammern (4) in der Nähe des zweiten Querbalkens (2) von unten her an eine jeweilige Montageschiene (3) gekoppelt ist und wobei jede kastenförmige Klammer (4) an der geneigten Oberfläche befestigt ist, oder
eine zweite Konfiguration zum Tragen von Solaranlagen und der Befestigung auf flachen Oberflächen anzunehmen, wobei jeder Pfosten (5) auf der flachen Oberfläche befestigt ist, wobei die Unterseite und die daran angrenzende Seitenfläche jedes kastenförmigen Elements (4) des ersten Paars kastenförmiger Klammern (4) in das obere hohle Ende eines jeweiligen Pfostens (5) gesteckt ist und die Enden der Montageschienen (3) in Zusammenwirken mit dem zweiten Querbalken (2) in Kontakt mit dieser flachen Oberfläche sind.

2. Anordnung (1) nach dem vorhergehenden Anspruch, **dadurch gekennzeichnet, dass** sie weiter umfasst
zwei weitere Montageschienen (8), die jede an eine jeweilige Montageschiene (3) gekoppelt sind, wobei das erste Paar kastenförmiger Klammern (4) von unten her an die zwei weiteren Montageschienen (8) gekoppelt ist,
zwei Aufnahmebügel (7) zum Tragen des Speichertanks (10) einer Solaranlage, von oben her an die weiteren Montageschienen (8) gekoppelt, und
ein drittes Paar kastenförmiger Elemente (4), die von unten her an die zwei weiteren Montageschienen (8) gekoppelt sind.

3. Anordnung (1) nach dem vorhergehenden Anspruch, **dadurch gekennzeichnet, dass** sie zwei Verstärkungsplatten (9) umfasst, die jede an einen jeweiligen Aufnahmebügel (7) und an eine jeweilige weitere Montageschiene (8) gekoppelt sind, um den Aufnahmebügel (7) zu tragen.

4. Anordnung (1) nach einem der vorhergehenden Ansprüche, **dadurch gekennzeichnet, dass** sie vier Hebebügel (6) umfasst, und wobei in der ersten Konfiguration jeder Hebebügel (6) von unten her an eine jeweilige kastenförmige Klammer (4) gekoppelt ist und an der schrägen Oberfläche befestigt ist.

5. Anordnung (1) nach einem der vorhergehenden Ansprüche, **dadurch gekennzeichnet, dass** sie vier weitere Querbalken (11) umfasst, die jeder an ein Ende der Querbalken (2) gekoppelt sind.

6. Anordnung (1) nach einem der vorhergehenden Ansprüche, **dadurch gekennzeichnet, dass** sie mindestens zwei Verbindungsstangen (12,13) umfasst und dass in der zweiten Konfiguration die mindestens zwei Verbindungsstangen (12) in X-Form zwischen den zwei Pfosten (5) angeordnet sind.

7. Anordnung (1) nach einem der vorhergehenden Ansprüche, **dadurch gekennzeichnet, dass** sie zwei weitere Verbindungsstangen (12, 13) umfasst und dass in der zweiten Konfiguration jede der weiteren Verbindungsstangen (12, 13) einen jeweiligen Pfosten (5) mit einer jeweiligen Montageschiene (3) verbindet.

8. Anordnung (1) nach einem der Ansprüche 6 oder 7, wenn abhängig von Anspruch 2 oder 3, **dadurch gekennzeichnet, dass** in der ersten Konfiguration mindestens zwei der mindestens zwei Verbindungsstangen (12, 13) an ein jeweiliges Paar der weiteren kastenförmigen Klammern (4) gekoppelt sind.

9. Anordnung (1) nach einem der Ansprüche 6 oder 7, **dadurch gekennzeichnet, dass** in der ersten Konfiguration eine der mindestens zwei Verbindungsstangen (12, 13) an eine oder beide des Paars kastenförmiger Klammern (4) gekoppelt ist.

10. Anordnung (1) nach einem der vorhergehenden Ansprüche, **dadurch gekennzeichnet, dass** die Querbalken (2, 11), die Montageschienen (3, 8) und/oder die Verbindungsstangen (12, 13) einen L-förmigen Querschnitt aufweisen.

## Revendications

1. Assemblage (1) pour supporter et fixer des systèmes solaires, lesdits systèmes solaires comprenant un capteur solaire et le cas échéant une cuve de stockage (10), ledit assemblage (1) comprenant
au moins deux traverses (2) parallèles l'une à l'autre ;
au moins deux barres de montage (3) parallèles l'une à l'autre et perpendiculaires auxdites traverses (2) et couplées à ces dernières en formant un quadrilatère pour le support du capteur solaire,
une première paire de supports (4) en forme de boîtes , chaque support (4) en forme de boîte possédant une face inférieure, une face supérieure et deux faces latérales, chaque support (4) en forme de boîte étant couplé à partir du bas à une barre de montage (3, 8) à proximité de la première traverse (2) ;
deux montants (5) dont l'extrémité supérieure possède une section transversale quadrangulaire creuse ; et
une seconde paire de supports (4) en forme de boîtes,
ledit assemblage (1) étant configuré pour prendre en alternance
une première configuration pour le support de systèmes solaires et la fixation à des surfaces inclinées, chacun desdits deux supports supplémentaires (4) en forme de boîtes étant couplé à partir du bas à une barre de montage respective (3) à proximité de la seconde traverse (2) et chaque support (4) en forme de boîte étant fixé à ladite surface inclinée, ou
une seconde configuration pour le support de systèmes solaires et la fixation à des surfaces plates, chaque montant (5) étant fixé à ladite surface plate, la face inférieure et la face latérale contiguë de chaque élément (4) en forme de boîte de la première paire de supports (4) en forme de boîtes étant insérées dans ladite extrémité supérieure creuse d'un montant respectif (5) et les extrémités desdites barres de montage (3) étant mises en correspondance avec la seconde traverse (2) en contact avec ladite surface plate.

2. Assemblage (1) selon la revendication précédente, **caractérisé en ce qu'**il comprend en outre
deux barres de montage supplémentaires (8), chacune couplée à une barre de montage respective (3), ladite première paire de supports (4) en forme de boîtes étant couplée à partir du bas auxdites deux barres de montage supplémentaires (8) ;
deux étriers (7) pour le support de la cuve de stockage (10) d'un système solaire, couplés à partir du haut auxdites barres de montage supplémentaires (8), et
une troisième paire d'éléments (4) en forme de boîtes couplée à partir du bas auxdites deux barres de montage supplémentaires (8).

3. Assemblage (1) selon la revendication précédente, **caractérisé en ce qu'**il comprend deux plaques de renforcement (9), chacune couplée à un étrier respectif (7) et à une barre de montage supplémentaire respective (8) dans le but de supporter ledit étrier (7).

4. Assemblage (1) selon l'une quelconque des revendications précédentes, **caractérisé en ce qu'**il comprend quatre supports de levage (6), et dans lequel, dans ladite première configuration, chaque support de levage (6) est couplé à partir du bas à un support respectif (4) en forme de boîte et est fixé à ladite surface inclinée.

5. Assemblage (1) selon l'une quelconque des revendications précédentes, **caractérisé en ce qu'**il comprend quatre traverses supplémentaires (11), chacune couplée à une extrémité desdites traverses (2).

6. Assemblage (1) selon l'une quelconque des revendications précédentes, **caractérisé en ce qu'**il comprend au moins deux barres de liaison (12, 13), et **en ce que**, dans ladite seconde configuration, lesdites au moins deux barres de liaison (12) sont arrangées en formant un X entre lesdits deux montants (5).

7. Assemblage (1) selon l'une quelconque des revendications précédentes, **caractérisé en ce qu'**il comprend en outre deux barres de liaison supplémentaires (12, 13), et **en ce que**, dans ladite seconde configuration, chacune desdites barres de liaison supplémentaires (12, 13) est reliée à un montant respectif (5) avec une barre de montage respective (3).

8. Assemblage (1) selon l'une quelconque des revendications 6 ou 7, lorsqu'elle dépend de la revendication 2 ou 3, **caractérisé en ce que**, dans ladite première configuration, au moins deux desdites au moins deux barres de liaison (12, 13) sont couplées à une paire respective desdits supports supplémentaires (4) en forme de boîtes.

9. Assemblage (1) selon l'une quelconque des revendications 6 ou 7, **caractérisé en ce que**, dans ladite première configuration, une desdites au moins deux barres de liaison (12, 13) est couplée à une desdites paires de supports (4) en forme de boîtes ou aux deux.

10. Assemblage (1) selon l'une quelconque des revendications précédentes, **caractérisé en ce que** lesdites traverses (2, 11), lesdites barres de montage (3, 8) et/ou lesdites barres de liaison (12, 13) possèdent une section transversale en forme de « L ».
